# EUROPÄISCHE PATENTANMELDUNG

(11) **EP 0 686 458 A1**
(43) Veröffentlichungstag der Anmeldung: **13.12.1995**
(21) Anmeldenummer: 95108936.6
(22) Anmeldetag: 09.06.1995
(51) Int. Cl.: B23P 19/00, B23P 19/06, B25B 23/10

(54) **Setzkopf und Verfahren zum Betrieb desselben**

(30) Priorität: 10.06.1994 DE 4420426; 22.08.1994 DE 4429737
(71) Anmelder: PROFIL-Verbindungstechnik GmbH & Co. KG, D-61381 Friedrichsdorf (DE)
(72) Erfinder: Müller, Rudolf, D-60437 Frankfurt (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(57) **Zusammenfassung**

Ein Setzkopf (10) zum Einsetzen von aus Kopf- (22) und Schaftteilen (24) bestehenden Elementen in ein vorgelochtes Werkstück (18) sowie das dazuhörige Verfahren zeichnet sich dadurch aus, daß das jeweils einzusetzende Element (20) im Setzkopf (10) von mindestens drei Haltefingern haltbar ist, wobei jeder Haltefinger (90) das Element (20) zunächst sowohl am Kopfteil (22) als auch im Abstand davon am Schaftteil (24) in Setzrichtung zentriert, ausrichtet und positioniert.

## Beschreibung

Die vorliegende Erfindung betrifft einen Setzkopf bzw. ein Verfahren zum Einsetzen von aus Kopf- und Schaftteilen bestehenden Elementen in vorgelochte Werkstücke und befaßt sich vor allem, jedoch nicht ausschließlich, mit dem Einsetzen von Bolzenelementen in Blechteile, wobei die Bolzenelemente mit den Blechteilen über eine Nietverbindung befestigt werden. Solche vernietbaren Bolzenelemente sind bekannt und können in zwei unterschiedlichen Kategorien klassifiziert werden, je nach dem ob die Nietverbindung im Bereich des Überganges zwischen dem Schaft und dem Kopfteil oder an dem dem Schaftteil abgewandten Stirnseite des Kopfes entsteht.

Die vorliegende Erfindung befaßt sich vornehmlich mit dem Setzen von Bolzenelementen der erstgenannten Kategorie, bei der die Nietverbindung im Bereich des Überganges zwischen dem Schaftteil und dem Kopfteil entsteht, kann aber auch umgewandelt werden, um auch für Bolzen der zweiten Kategorie verwendet zu werden. Der Setzkopf ist aber im Prinzip auch für die Einführung bzw. für das Setzen von hohlen Befestigungselementen wie Nietmuttern geeignet, vor allem dann, wenn diese eine längliche Form aufweisen.

Ein Beispiel für einen modernen Nietbolzen, der mittels des erfindungsgeinäßen Setzkopfes bzw. des erfindungsgemäßen Verfahrens in ein Blechteil bzw. ein Plattenteil einsetzbar ist, ist der deutschen Patentanmeldung P 44 10 475.8 der vorliegenden Anmelderin vom 25. März 1994 zu entnehmen. Das dort beanspruchte, durch Nieten in ein Blechteil einsetzbare Element besteht aus einem Schaftteil und einem einstückig daran angeformten Kopfteil, und zeichnet sich dadurch aus, daß das Element an seiner als Anlagefläche dienenden Unterseite konkave, umfangsmäßig geschlossene Felder oder Taschen aufweist, welche teilweise durch sich vom Schaftteil nach außen weg erstreckende Rippen begrenzt sind, wobei die schaftseitigen Enden der Rippen sich erhaben am Schaftteil entlang erstrecken und an den dem Kopfteil abgewandten Enden in mindestens einer sich spiralförmig um das Schaftteil herum angeordnete Vertiefung übergehen. Währen des Setzverfahrens wird das Metall des Blechteiles in die Felder und in die Vertiefung hineingeformt und bildet so eine formschlüssige Verbindung zwischen dem Element und dem Blechteil, wodurch nicht nur eine Verdrehsicherung des Elementes gegeben ist, sondern auch eine Verbindung, welche den Verlust des Elementes aus dem Blechteil vor und während der Anbringung des mittels des Elementes am Blechteil zu befestigenden Gegenelementes verhindert.

Setzköpfe zum Einsetzen von Befestigungselementen auf Bolzenelemente sind ebenfalls bekannt und werden häufig in Pressen eingesetzt, um Befestigungselemente mit Blechteilen während der Herstellung oder Formgebung der Blechteile zu vernieten.

Beispielsweise ist der DE-PS 34 47 006 ein Setzkopf zu entnehmen, der zum Einsetzen von Bolzenelementen geeignet ist, die an der dem Schaftteil abgewandten Stirnfläche des Kopfes mit einem Blechteil vernietet werden. Dabei wird das Gewindeteil des Bolzens über seine volle Länge innerhalb einer Bohrung eines Stempels aufgenommen, so daß eine hochwertige Ausrichtung des Bolzenelementes aufgrund der ausgezeichneten mechanischen Führung des Stempels gewährleistet ist.

Vor allem bei Bolzenelementen, die im Bereich des Überganges zwischen dem Schaftteil und der Unterseite des Kopfteiles mit Blechteilen vernietet werden, besteht das Problem, eine genaue Ausrichtung des Bolzenelementes innerhalb des Setzkopfes und während des Einsetzens des Bolzenelementes sicherzustellen.

Die Aufgabe der vorliegenden Erfindung ist es daher, einen Setzkopf für das Einsetzen von Befestigungselementen, vornehmlich aber nicht ausschließlich Bolzenelementen, die im Bereich des Überganges zwischen dem Schaftteil und dem Kopf mit einem Blechteil vernietet werden, zu schaffen, der bei unaufwendiger kompakter Bauweise und einwandfreier Funktionsweise eine ausgezeichnete Ausrichtung des Befestigungselementes vor und während des Setzverfahrens gewährleistet und zwar eine Ausrichtung, welche auch nicht durch Maschinenvibrationen oder Erschütterungen beeinträchtigt wird.

Zur Lösung dieser Aufgabe wird erfindungsgemäß vorgesehen, daß das jeweils einzusetzende Element im Setzkopf von mindestens drei Haltefingern haltbar ist, wobei jeder Haltefinger das Element zunächst sowohl am Kopfteil als auch im Abstand davon am Schaftteil in Setzrichtung zentriert, ausrichtet und positioniert.

Das entsprechende Verfahren zum Einsetzen des Elementes zeichnet sich dementsprechend so aus, daß die Elemente zwischen mindestens drei Haltefingern eingeführt werden, welche jeweils das Element zunächst sowohl am Kopfteil als auch im Abstand davon am Schaftteil in Setzrichtung zentriert ausgerichtet und positioniert halten, daß bei der anschließenden Schließbewegung des Setzkopfes die Haltefinger das jeweilige Element noch während der anfänglichen Einführung des Schaftteils in das Loch des Werkstückes, welches über eine Matrize ausgerichtet positioniert ist, halten, und erst nach Übernahme der Führung des Schaftteils durch die Führungsbohrung der Matrize nach außen wegschwenken, jedoch auch während dieser Schwenkbewegung das Kopfteil zentriert führen, bis das Kopfteil des Elementes am Werkstück anliegt oder sich diesem nähert und daß mittels des Setzstempels und der Matrize das Element mit dem Blechteil formschlüssig verbunden wird.

Dadurch, daß das jeweils einzusetzende Element von mindestens drei Haltefingern sowohl am Kopfteil als auch im axialen Abstand davon am Schaftteil gehalten wird, wird erfindungsgemäß sichergestellt, daß die Längsachse des Befestigungselementes eine vorbestimmte Position konzentrisch zum Setzstempel annimmt und nicht verkanten kann. Diese Sicherheit gegen Verkanten wäre beispielsweise mit nur zwei Haltefingern nicht ohne weiteres einwandfrei gegeben, könnte aber auch mit mehreren Haltefingern erreicht werden, die jedoch auch einen zusätzlichen mechanischen Aufwand darstellen und an sich nicht nötig sind. Die Verwendung von drei Haltefingern hat auch den Vorteil, daß ausreichend Platz für die Einführung des Befestigungselementes zwischen den drei Haltefingern gegeben ist. Eine funktionsfähige Anordnung mit lediglich zwei Haltefingern wäre jedoch erfindungsgemäß möglich, insbesondere dann, wenn die Flächen der Haltefinger, welche mit dem Befestigungs- bzw. Bolzenelement in Berührung gelangen, formmäßig an die Befestigungselemente angepaßt, beispielsweise mit konkaven, zylindrischen Flächen ausgestattet sind, welche formschlüssig an die Befestigungselemente angreifen und ein Verkippen derselben verhindern.

Dadurch, daß die Haltefinger das Befestigungselement auch am Kopfteil halten, wird sichergestellt, daß das Befestigungselement eine genau vorgegebene axiale Position entlang der Längsachse des Setzstempels annimmt, so daß die Arbeitsbewegungen des Setzkopfes bzw. des Setzstempels und der Ablauf des Setzverfahrens genauestens vorgegeben werden können. Das Befestigungselement wird aber nicht nur durch die Haltefinger ausgerichtet und positioniert, sondern auch genau zentriert, so daß enge Toleranzen in bezug auf die Positionierung des entsprechenden Loches des darunterliegenden Blechteiles eingehalten werden können, und das vorgefertigte Loch des Blechteils kann einen Durchmesser aufweisen, der nur geringfügig größer ist als der Außendurchmesser des Schaftteils des Befestigungselementes, wodurch eine sichere Nietverbindung erreicht wird, ohne befürchten zu müssen, daß das Schaftteil bei der Einführung durch das Loch aufgrund von Positionierungsungenauigkeiten vom umliegenden Metall des Blechteils beschädigt wird.

Da die erfindungsgemäße Art der Halterung des Befestigungselementes im Setzkopf auch ein Verkanten des Elementes ausschließt, ist die Gefahr der Beschädigung des Werkzeuges bzw. des Werkstückes beim Einsetzen des Befestigungselementes aufgrund von verkanteten Positionen derselben weitestgehend ausgeschlossen, so daß ungewollte Störungen des Betriebsablaufes minimiert werden.

Die Bewegungen der schwenkbar angeordneten Haltefinger werden erfindungsgemäß miteinander synchronisiert, wodurch sichergestellt wird, daß die erwünschte zentrierte Ausrichtung des Befestigungselementes mit der Achsrichtung des Setzstempels stets gegeben ist.

Die Synchronisiereinrichtung besteht vorzugsweise aus einer Hülse mit Formschrägen zur Steuerung der Schwenkbewegung der Haltefinger bei der Arbeitsbewegung des Setzkopfes. Dabei werden vorzugsweise nachgiebige Druckmittel zum Vorspannen der Hülse in Richtung des Werkstückes während der Arbeitsbewegung des Setzkopfes vorgesehen. Aufgrund dieser Vorspannung werden die Haltefinger in Richtung auf das Befestigungselement zugespannt, wobei diese Vorspannung mit einer ausreichend hohen Kraft bewerkstelligt wird, um die erforderliche Zentrierung und Ausrichtung der Befestigungselemente zu sichern und die Kraft von etwaigen, die Haltefinger zu einer Schwenkbewegung in der Richtung radial nach außen vorspannenden Federn zu überwinden.

Mindestens einige der Haltefinger sollen vorzugsweise eine jeweilige Schulter aufweisen, wobei die Schulter der Haltefinger mindestens mit der Unterseite und vorzugsweise auch mit der Seitenfläche des Kopfteiles des jeweiligen Befestigungselementes zur Positionierung desselben zusammenwirken sollen. Besonders günstig ist es, wenn die Schulter bezogen auf die Lage der jeweiligen Schwenkachse des Haltefingers und die Form der Unterseite des Kopfteils eine einem Evolventen ähnliche Form aufweisen. Hierdurch erfolgt die Bewegung des Kopfteils des Befestigungselementes auf den Schultern der Haltefinger nach Art einer Abrollbewegung der Haltefinger, so daß einerseits wenig Reibung entsteht, welche die Bewegung der Befestigungselemente hindern könnte, andererseits aber auch keine ausgeprägte Rutschbewegung des Kopfteils des jeweiligen Befestigungselementes in Bezug auf die Haltefinger, so daß Verschleißerscheinungen minimiert werden. Da die Schulter die Kopfteile der entsprechenden Befestigungselemente auch während einem axialen Bewegungsabschnitt der Befestigungselemente mit diesen in Berührung bleiben, üben sie auch während dieses Bewegungsabschnittes eine Abstützfunktion auf das jeweilige Befestigungselement auf.

Während diesem Bewegungsabschnitt bewegt sich der Setzstempel in Richtung auf das Kopfteil des Befestigungselementes auf dieses zu, bis eine Zentriereinrichtung am Stirnende des Stempels mit einer komplementären Zentrierhilfe des jeweiligen Befestigungselementes in Berührung gelangt und die zentrierte Führung und Ausrichtung des jeweiligen Befestigungselementes mindestens zum Teil übernimmt.

Besonders günstige Ausführungsformen des Setzkopfes sowie des Verfahrens zum Einsetzen von Befestigungselementen lassen sich den Unteransprüchen entnehmen. Insbesondere gestattet die zweiteilige Ausbildung des Gehäuses des Setzkopfes eine rationelle Fertigung des Setzkopfes, bei gleichzeitiger Einhaltung von engen Toleranzen.

Der hierin beschriebene Setz- und/oder Stanzkopf für Befestigungselement, so wie im Anspruch 21 definiert, hat sich in der Praxis als sehr vorteilhaft erwiesen, da es auf diese Weise gelingt, mit einer relativ kurzen Bauhöhe sowohl eine insgesamt kompakte Anordnung als auch einen zuverlässig funktionierenden Setz- und/oder Stanzkopf zu schaffen, der für die Anbringung von allen herkömmlichen Arten von Befestigungselementen mit Stanz- und/oder Nietverhalten verwendet werden kann, d.h. u.a. auch für die Einbringung von selbststanzenden Stanzbolzen und Stanzmuttern oder aber auch für die Einbringung von Bolzen und Mutterelementen oder anderen Befestigungselementen, die lediglich durch ein Nietverfahren mit einem oder mehreren Blechteilen zu verbinden sind. Der Oberbegriff des Anspruches 21 berücksichtigt den Stand der Technik gemäß der DE-OS 34 47 006.

Die erfindungsgemäß erreichte kompakte Bauweise eignet sich vor allem für die Anwendung als eine integrale Baueinheit, welche sich durch eine Schnellschlußkupplung an einem Maschinenteil, beispielsweise an einem Teil einer Presse anbringen läßt, so wie in der deutschen Patentanmeldung P 43 10 953.5 vorgeschlagen. Die Offenbarung dieser deutschen Patentanmeldung im Hinblick auf die Schnellschlußkupplung wird hierdurch in die vorliegende Anmeldung aufgenommen.

Die Erfindung wird nachfolgend anhand eines Ausführungsbeispiels unter Bezugnahme auf die Zeichnung näher erläutert, in welcher zeigen:
- Fig. 1: eine teilweise geschnittene Darstellung eines erfindungsgemäßen Setzkopfes,
- Fig. 2: eine schematische Darstellung ähnlich der Fig. 1, jedoch von einer abgewandelten erfindungsgemäßen Ausführungsform, wobei nur der Haltefingerbereich des Setzkopfes gezeigt ist, und zwar in einer Teildarstellung, vornehmlich auf der rechten Seite der Längsachse des Setzstempels.

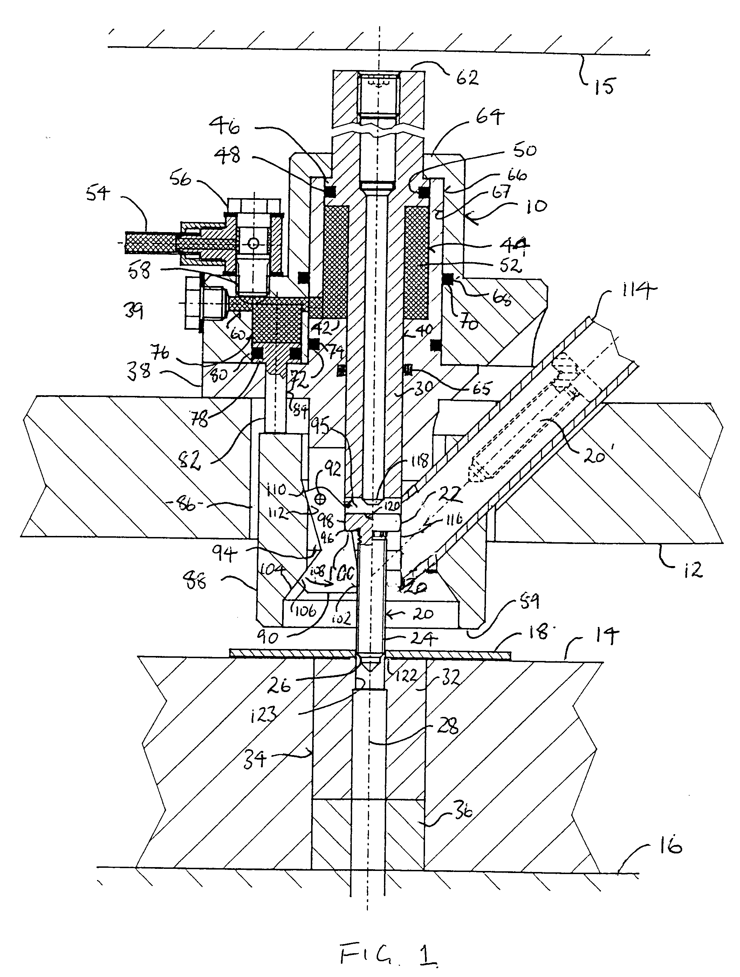

Fig. 1 zeigt den erfindungsgemäßen Setzkopf 10, der an einem gefederten Niederhalter 12 des Werkzeugoberteils einer Presse (schematisch durch die Platte 15 gezeigt) angebracht ist, wobei der gefederte Niederhalter 12 mit einem Werkzeugunterteil 14 zusammenarbeitet, das an der Grundplatte 16 der Presse befestigt ist.

Zwischen dem gefederten Niederhalter 12 und dem Werkzeugunterteil 14 befindet sich ein Blechteil 18, das je nach Auslegung des Herstellungsverfahrens entweder weitestgehend schon vorher geformt ist oder zwischen dem Werkzeugoberteil und dem Werkzeugunterteil 14 (weiter) verformt werden soll. Wesentlich für die vorliegende Erfindung ist, daß in dem gezeigten Zustand ein Befestigungselement 20, hier in Form eines Bolzenelementes mit einem Kopfteil 22 und einem Schaftteil 24 in ein vorgefertigtes Loch 26 des Blechteiles eingesetzt und mit diesem vernietet werden soll.

Die gestrichelte Linie 28 zeigt die Längsachse des Setzkopfes 10, d.h. zugleich die Setzrichtung, wobei die Längsachse des Stempels 30 des Setzkopfes, die Längsachse des Bolzenelementes 20 und die Längsachse der mit dem Setzkopf zusammenarbeitenden, in einer Bohrung 34 des Werkzeugunterteils eingesetzten und auf einem Ringglied 36 abgestützten Matrize 32 miteinander fluchten, d.h. der Setzstempel 30, das Bolzenelement 20 und die Matrize 32 sind miteinander koaxial ausgerichtet.

Der Setzkopf besteht aus einem zweiteiligen Gehäuse 38, 39, dessen beide Teile miteinander und mit dem gefederten Niederhalter 12 durch mehrere in der Zeichnung nicht gezeigte Schrauben befestigt sind. Das untere Gehäuseteil 38 des Setzkopfes weist eine mittlere zylindrische Bohrung 40 auf, in der der Setzstempel 30 verschiebbar gelagert ist. Die Bohrung 40 ist konzentrisch zur Längsachse 28 des Setzkopfes 10 angeordnet. Die Bohrung 40 geht über eine Ringstufe 42 in eine weitere Bohrung 44 über, welche im Vergleich zu der Bohrung 40 einen größeren Durchmesser aufweist. Der Stempel 40 weist ein zylindrisches Unterteil auf und ist an seinem oberen Ende mit einem Ringflansch 46 versehen, welcher einen Kolben bildet und mit der Bohrung 44 größeren Durchmessers zusammenarbeitet. Ein 0-Ring 48 sorgt für die Abdichtung des die Kolbenfunktion ausübenden Flansches 46 und ist in einer Ringnut 50 dieses Flansches untergebracht. Aufgrund dieser Anordnung wird ein Ringraum (Kolbenraum) 52 zwischen dem Unterteil des Stempels 30 und der Bohrung 44 größeren Durchmessers gebildet. Dieser Ringraum 52 wird in diesem Beispiel mit Preßluft mit einem Druck von beispielsweise 6 bis 8 bar beaufschlagt, welcher über eine Leitung 54 von einer entsprechenden Druckquelle kommend, über den Anschluß 56, den Kanal 58 und eine Querbohrung 60 in den Ringraum 52 eingeleitet wird. Der im Ringraum 52 herrschende Druck führt dazu, daß in Arbeitszuständen, in denen keine Kraft auf die obere Stirnfläche 62 des Stempels 30 ausgeübt wird, der Kolben 46 an einem Flanschteil 64 des oberen Gehäuseteils 40 anliegt, so daß dieser Flanschteil 64 die axiale Bewegung des Setzstempels 30 in der Richtung vom Werkzeugunterteil 14 weg begrenzt.

Das Bezugszeichen 65 deutet auf eine O-Ringdichtung hin, welche wahlweise zwischen dem Stempel 30 und der Zylinderbohrung 40 eingesetzt werden kann. Hier befindet sich die Ringdichtung 65 in einer Ringnut der Zylinderbohrung 40, die Dichtung könnte aber auch in einer Ringnut des Stempels angeordnet werden. Wenn eine solche Ringdichtung 65 vorgesehen ist, so sorgt sie dafür, daß Druckluftleckagen minimiert werden, so daß eine übergroße Auslegung der Druckluftquelle nicht erforderlich ist.

Es kann aber durchaus vorteilhaft sein, auf die Ringdichtung 65 zu verzichten und einen gewissen Druckluftverlust entlang des Stempels 30 innerhalb der Bohrung 40 zuzulassen. Die für solche Anlagen verwendete Druckluft führt meistens über einen Öler und enthält somit einen geringen Anteil an Öl, welcher zur Schmierung des Stempels nützlich sein kann.

Bei normaler Bemessung des Stempels 30 und der Zylinderbohrung 40 ist der Druckverlust aufgrund der Länge der Bohrung sowieso relativ minimal, die Schmierung sorgt aber für eine lange Lebensdauer. Es ist im Sinne der Verbesserung der Schmierung auch möglich, Riefungen wie bei einem Gewehrlauf in der Zylinderbohrung 40 vorzusehen oder eine entsprechende Riefung an der Außenoberfläche des Setzstempels 30. Die Luftmenge, die an dem Stempel vorbeiströmt, wird hierdurch erhöht, wodurch auch die Schmierung des Stempels verbessert wird. Im übrigen kann es auf diese Weise gelingen Abrieb aus dem Bereich des Befestigungselementes bzw. innterhalb des Bauteils 88 und/oder um die Haltefinger herum aus dem Setzkopf herauszublasen, so daß die Reinigungsintervalle für den Setzkopf wesentlich herabgesetzt werden können. Durch vorbestimmte Positionen und Winkel der Riefungen können gezielte Luftstöße erreicht werden, die für die Säuberung des Innenlebens des Setzkopfes sorgen.

Aus der Zeichnung ist ersichtlich, daß das Gehäuseoberteil 39 unterhalb des Flanschteils 64 eine zylindrische Bohrung 66 aufweist, welche über die zylindrische Außenwand 67 des oberen Teils des unteren Gehäuseteiles 38 paßt. Eine in eine Ringnut 68 des Gehäuseoberteils 39 untergebrachte Ringdichtung 70 dichtet die Verbindungsfläche zwischen dem Gehäuseoberteil und dem Gehäuseunterteil oberhalb der Querbohrung 60 ab und verhindert, daß Druckluft in dieser Richtung entweichen kann.

Eine weitere Ringnut 72 mit Ringdichtung 74 ist im Gehäuseunterteil 38 unterhalb der Querbohrung 60 vorgesehen, um zu verhindern, daß Druckluft nach unten zwischen den beiden Gehäuseteilen entweicht.

Im unteren Flansch des zylinderhutartigen Gehäuseoberteils 40 befinden sich mehrere, um die mittlere Längsachse 28 des Setzkopfes herum angeordnete Zylinderbohrungen 76, von denen lediglich eine in der Fig. 1 gezeigt ist. Es sind vorzugsweise drei solche Bohrungen vorgesehen, die winkelmäßig im wesentlichen gleichmäßig verteilt, um die mittlere Längsachse 28 des Setzkopfes angeordnet sind. In jeder der Zylinderbohrungen 76 befindet sich ein Kolben 78 mit Dichtring 80 und eine nach unten gerichtete Kolbenstange 82. Jede Kolbenstange 82 führt durch eine jeweilige Führungsbohrung 84 im Flanschbereich des unteren Gehäuseteils 38 in eine Ringkammer 86, welche innerhalb des gefederten Niederhalters 12 gebildet ist. Die freien Enden der in diesem Beispiel drei Kolbenstangen (von denen nur die eine Kolbenstange 82 ersichtlich ist), sind mit dem Bauteil 88 in Form einer Hülse 88 verbunden, welche durch die Wirkung der in den Zylinderbohrungen 76 vorhandenen Druckluft stets nach unten vorgespannt ist, d.h. in Richtung auf das Werkzeugunterteil 14 zu. Es ist ersichtlich, daß die Zylinderbohrungen 76 mit dem Ringraum 42 über die Querbohrung 60 stets kommunizieren, so daß die Druckluft den Stempel 30 stets nach oben und, wie bereits zum Ausdruck gebracht, die Hülse 88 stets nach unten vorspannt.

Das Gehäuseunterteil 38 trägt im unteren Bereich drei schwenkbar angeordnete Haltefinger 90, von denen lediglich der eine in der Fig. 1 ersichtlich ist, Da die zwei weiteren außerhalb der Schnittebene liegen. Die drei Haltefinger 90, welche vorzugsweise in gleichmäßigen Winkelabständen um die Längsachse 28 des Setzkopfes angeordnet sind, sind an jeweiligen Querstiften 92 schwenkbar aufgehängt und durch jeweilige Längsschlitze 94 des Gehäuseunterteils 38 schwenkbar geführt, wobei die Breite jedes Schlitzes 94 nur geringfügig breiter als der jeweilige Haltefinger 90 bemessen ist, damit die Haltefinger schwenkbar, jedoch mit engen Toleranzen gut geführt sind. Das untere Ende des Gehäuseunterteils ist im Bereich des Bolzenelementes hohl ausgebildet und zwar zeigt die Linie 95 die Seitenwand des entsprechenden, zur Achse 28 konzentrischen Hohlraum an.

Es ist ersichtlich, daß das Kopfteil 22 des Bolzenelementes 20 an einer Schulter 96 des Haltefingers 90 sitzt, wobei die eine Fläche 98, welche die Schulter 96 definiert, an der äußeren Seitenfläche des Kopfteils 22 anliegt, und die zweite Fläche 100 der Schulter 96 schräg nach unten geneigt ist und einen keilförmigen Abstand zu der Unterseite des Kopfteils 22 bildet. Da jeder der drei Haltefinger 90 eine entsprechende Stufe 96 aufweist, wird das Bolzenelement 20 einwandfrei axial in Längsrichtung 28 des Setzkopfes durch die drei Haltefinger 90 positioniert. Darüber hinaus, weist jeder Haltefinger 90 an seinem unteren Ende eine vorzugsweise senkrechte Fläche 102 auf, der am Schaftteil 24 des Bolzenelementes 20 anliegt, und zwar in axialem Abstand von der Schulter 96. Durch die Berührung des Bolzenelementes 20 mit jedem Haltefinger an zwei axial beabstandeten Punkten 96, 102 und durch die besondere Art der Anordnung der Haltefinger, wie nachfolgend erläutert wird, wird sichergestellt, daß die Längsachse des Bolzenelementes 20 koaxial zur Längsachse 28 des Setzkopfes ausgerichtet ist. Mit anderen Worten wird das Bolzenelement 20 durch die Haltefinger 90 zentriert ausgerichtet und positioniert gehalten.

Aus der Zeichnung ist auch ersichtlich, daß die Hülse 88 eine innere konusförmige Ringfläche 104 aufweist, wobei diese konusförmige Fläche nach unten divergiert. Diese konusförmige Fläche 104 arbeitet mit jeweiligen Schrägflächen 106 der Haltefinger 90 zusammen, wobei in der dargestellten Stellung in Anlage an dem Bolzenelement 20 die Schrägflächen 106 jeweils parallel zu der Oberfläche der konusförmigen Ringfläche 104 liegen. Aufgrund der Vorspannung der Hülse 88 nach unten, werden alle drei Haltefinger 90 in Richtung des Pfeiles 108 nach innen vorgespannt, so daß die erwünschte Berührung mit dem Bolzenelement 20 an den Flächen 98 und 102 zustandekommt.

Nachdem jeder Haltefinger einerseits die gleichen Abmessungen zu den anderen aufweist und alle drei um gleich geordnete Stifte 92 schwenkbar aufgehängt sind, stellt die Hülse 88 sicher, daß die Flächen 98 bzw. 102 jeweils den gleichen Abstand von der Längsachse 28 des Setzkopfes aufweisen, so daß das Bolzenelement 20 zentriert angeordnet ist. Wird, während des Arbeitstaktes der Presse, das Werkzeugoberteil (Platte 15) nach unten gedrückt, so stößt die Hülse 88 mit seiner Stirnfläche 89 am Blechteil 18 an und hält diese am Werkzeugunterteil 14 fest. Die Kolbenstangen 82 drücken dann die jeweiligen Kolben 78 in die jeweiligen Zylinderbohrungen 76 nach oben, so daß bei weiterem Niederdrücken des Werkzeugoberteils eine weitere konusförmige Ringfläche 110 der Hülse 88, welche axial oberhalb und in Abstand von der konusförmigen Ringfläche 104 angeordnet ist und nach oben divergiert, gegen eine entsprechende Schrägfläche 112 an jeden der Haltefinger 90 drückt und dafür sorgt, daß alle drei Haltefinger miteinander synchronisiert nach außen entgegengesetzt zur Pfeilrichtung 108 schwenken und dabei es zulassen, daß das Bolzenelement, wie nachfolgend näher erläutert wird, vom Stempel 30 nach unten gedrückt wird.

Der Zeichnung ist weiterhin zu entnehmen, daß ein rohrförmiger Zuführkanal 114 schräg zur Längsachse 28 des Setzkopfes angeordnet ist, wobei das abgeschrägte Ende 116 des Zuführkanals an einer gedachten Fortsetzung der Zylinderbohrung 40 anliegt. Die zwei weiteren, in der Zeichnung nicht gezeigten Haltefinger sind vor und hinter dem Zuführkanal 114 angeordnet, bezogen auf die Ebene der Zeichnung. Auf diese Weise beeinträchtigt die Position des Zuführkanals 114 nicht die Arbeitsweise der Haltefinger 90 und ermöglicht es Bolzenelemente 20, die vereinzelt durch den Zuführkanal 114 geschickt werden, in den Raum zwischen den drei Haltefingern so einzuführen, daß sie unter Schwerkraft, die in der Fig. 1 dargestellte Lage annehmen, wie auch nachfolgend näher erläutert wird.

Schließlich ist aus der Zeichnung ersichtlich, daß der Stempel 30 eine Zentriereinrichtung in Form eines Zentrierstiftes 118 aufweist, der mit einer Zentrierhilfe 120 in Form einer Vertiefung komplementärer Gestalt in der oberen Stirnfläche des Kopfteils 22 des Bolzenelementes 20 zusammenarbeiten kann.

In diesem Beispiel weist die Matrize 32 einen Nasenbereich 122 auf, welcher der Herstellung der vernieteten Verbindung zwischen dem Blechteil 18 und dem Bolzenelement dient und entsprechend der genannten DEP 44 10 475.8 ausgebildet sein kann. Die Ausbildung dieses Nasenbereiches 122 ist aber für die Funktionsbeschreibung des Setzkopfes unwesentlich.

Die Arbeitsweise der erfindungsgemäßen Vorrichtung wird nachfolgend näher erläutert. Es wird davon ausgegangen, daß sich der Setzkopf in der Arbeitsstellung befindet, so wie in der Fig. 1 gezeigt. Diese Stellung entspricht einer Stellung der gefederten Niederhalter 12 kurz nach dem Verlassen des oberen Totpunktes der Presse, in der das Werkzeugoberteil 12 und das Werkzeugunterteil 14 ihre größte Entfernung voneinander haben. Es wird auch davon ausgegangen, daß sich das Bolzenelement 20 in der dargestellten Lage befindet und das weitere Bolzenelement 12' entweder noch nicht in den Führungskanal bzw. in dessen Endstück 114 eingeführt ist oder durch eine besondere Einrichtung an einer Weiterbewegung in Richtung der Längsachse 28 des Setzkopfes verhindert ist. Danach schließt die Presse weiter, d.h. die obere Preßplatte 15 fängt an sich in Richtung der Grundplatte 116 zu bewegen. Hierdurch kommt das Stirnende der Hülse 88 in Anlage an das Blechteil 18 und klemmt dieses zwischen sich und dem gefederten Niederhalter 12 fest. Die Spitze des Bolzenelementes 120 hat in diesem Stadium das Loch im Blechteil durchdrängt und das Schaftteil des Bolzens wird nunmehr von der als Führung 123 ausgebildeten mittleren Passage der Matrize geführt. Der Durchmesser der entsprechenden, die Führung 123 bildenden Bohrung ist dabei nur geringfügig größer als der Außendurchmesser des Schaftteiles 24 des Bolzenelementes 20. Während der nachfolgenden Schließbewegung wird das obere Gehäuseteil immer weiter in Richtung der Hülse 88 bewegt. Dabei verdrängen die Kolben 78 Luft aus den Zylinderbohrungen 76. Die konische Ringfläche 110 gelangt in Berührung mit den Schrägflächen 112 der Haltefinger und bewirkt, daß diese Haltefinger entgegen der Pfeilrichtung 108 vom Bolzenelement 20 weggeschwenkt werden. Dabei bewegt sich das Bolzenelement 20 langsam tiefer entlang der Schrägfläche 100, d.h. das Kopfteil 22 wird wenigstens während der ersten nach außen gerichteten Schwenkbewegung der Haltefinger 90 noch an den Schultern 96 abgestützt. Durch die Formgebung der Flächen 100 nach Art einer Evolventen tritt an diesen Flächen eine Abrollbewegung und keine Rutschbewegung auf. Somit bleibt das Kopfteil 22 des Bolzenelementes zentriert, obwohl die Flächen 98 sich vom Kopfteil entfernen. Die einwandfreie Führung und Zentrierung des Bolzenelementes bleibt somit weiterhin gewährleistet, denn das Bolzenelement 20 ist in diesem Stadium einerseits durch die Schulter 96 gehalten und andererseits wird das Schaftteil im axialen Abstand davon durch die Bohrung 123 der Matrize geführt.

Im fortgesetzten Stadium des Schließens der Presse nach erfolgtem Zurückweichen der gefederten Niederhalter 12 in Richtung des Werkzeugoberteils 15 kommt die obere Preßplatte in Berührung mit der Stirnfläche 62 des Stempels 30 und bewegt diesen nach unten, so daß die Zentriereinrichtung 118 in die Zentriervertiefung 120 des Bolzenelementes gelangt und diese, unterstützt durch die zylindrische Bohrung der Matrize 32, weiterhin axial ausgerichtet führt. Die Haltefinger 90 sind nunmehr so weit radial ausgeschwenkt, daß das Kopfteil 22 des Bolzenelementes 20 von den Schultern 96 der Haltefinger 90 freikommt und unter der Kraft des Stempels 40, welche von der oberen Preßplatte erzeugt wird, nach unten gedrückt wird und an die inneren Flanken der Haltefinger 90 und die Flächen 102 vorbeigleitet.

Diese Flanken üben eine bremsende Wirkung auf das Kopfteil 22 des Bolzenelements 20 aus und verhindern, daß das Bolzenelement vom Stempel 30 wegrutscht. Hierdurch wird die gute Zentrierung weiterhin beibehalten. Ggf. können Federelemente bspw. polyurethane Ringfedern, welche durch herkömmliche Ringdichtungen gebildet sind in entsprechende Ringnuten in die konusförmige Ringfläche 104 der Hülse 88 eingesetzt werden, welche eine leichte Vorspannung der Haltefinger in Anlage an das Bolzenelement bewirken und hierdurch die unvermeidbaren Herstellungstoleranzen der Bolzenelemente ausgleichen. Hierdurch wird im übrigen auch eine noch bessere Zentrierung des Bolzenelementes 20 im Zustand der Fig. 1 erreicht, in dem die Flächen 98 der Haltefinger am Kopfteil 22 anliegen.

Eine Fehlausrichtung des Bolzenelementes während des Gleitens an den inneren Schrägflächen der Haltefinger vorbei ist ausgeschlossen, da das Bolzenelement 20 einerseits in der Führungsbohrung 123 der Matrize und andererseits durch die Zentriereinrichtung 118 einwandfrei geführt wird. Während dieser weiteren Bewegung schließt der Stempel 30 auch die Ausgangsöffnung 116 des Zuführkanals 114, so daß die fehlerhafte Einführung eines weiteren Bolzenelementes verhindert wird. Am Ende der Schließbewegung der Presse drückt die Stirnfläche des Stempels 30 das Kopfteil 22 des Bolzenelementes 20 fest an das Blechteil 18, während das Blechteil 18 gleichzeitig von den Nasen 122 der Matrize 32 an der Unterseite abgestützt und verformt wird, so daß das Material des Blechteils 18 um das Loch 26 herum entsprechend der Ausbildung des Bolzenelementes verformt und mit dem Bolzenelement 20 vernietet wird.

In diesem Stadium befindet sich die Hülse 88 oben in Anlage an der Unterseite des oberen Gehäuseteils 38 und es kann ein neues Bolzenelement 20' in den Zuführkanal 114 eingeführt werden. Der Stempel 40 verhindert, daß das neue Bolzenelement 20' weiterrutscht.

Die Presse öffnet sich dann zunehmend. Die zwischen dem gefederten Niederhalter 12 und dem Werkzeugoberteil 15 eingesetzten Federelemente sorgen dafür, daß der gefederte Niederhalter zunächst unten bleibt. Die über die Leitung 54 gelieferte Preßluft drückt einerseits die Kolben 78 und daher die Hülse 88 nach unten und den Stempel 30 nach oben. Der Stempel 30 gibt dabei die Einführöffnung des Zuführkanals 114 frei und die Hülse schwenkt die Schwenkfinger 90 wieder in Richtung der in der Fig. 1 gezeigten Lage. Er synchronisiert hiermit die Bewegung der Haltefinger 90 und das weitere Bolzenelement 20', das beispielsweise von einer Vereinzelungseinrichtung freigegeben wird, so daß dieses den Zuführungskanal 114 hinunterrutscht, ggf. auch unter Einwirkung eines Preßluftstoßes und rutscht zwischen die Haltefinger 90, die im Begriff sind, in die Endposition gemäß Fig. 1 überzugehen. Auf diese Weise nimmt das neue Bolzenelement 20' die Stelle des in Fig. 1 gezeigten Bolzenelementes 20 an. Der Stempel 30 kehrt anschließend in seine nach oben vorgespannte Lage zurück und es kann eine weitere Schließbewegung der Presse stattfinden, mittels der das neue Bolzenelement 20' mit einem neuen Blechteil 18 (nicht gezeigt), das zwischenzeitlich in die Presse eingeführt wird, durch Wiederholung dieser Vorgänge vernietet wird.

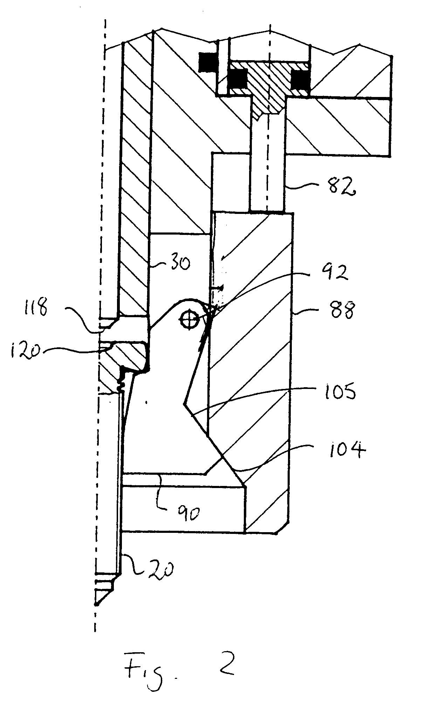

Fig. 2 zeigt eine etwas abgewandelte Ausführungsform der Vorrichtung der Fig. 1, bei der die Haltefinger 90 und die Hülse 88 etwas anders ausgebildet sind, indem die zweite konusförmige Ringfläche an der Hülse und auch eine entsprechende Schrägfläche an den Haltefingern fehlt. Das Wegschwenken der Haltefinger aus dem Bereich des Bolzenelementes 20 bzw. aus dem Bereich des Stempels 30 wird in diesem Beispiel durch die nach unten gerichtete Kraft des Stempelelementes 30 bewirkt und kann durch Federkraft ergänzt werden, beispielsweise von Federn, welche versuchen, die Haltefinger um die Stifte 92 nach außen zu schwenken. Der Verlauf der Schwenkbewegung ist auch in diesem Beispiel durch die Zusammenarbeit der konusförmigen Ringfläche 104 und der entsprechenden Schrägfläche 105 der jeweiligen Haltefinger bebestimmt.

In diesem Beispiel ist die Zentriereinrichtung 118 des Stempels 30 anders ausgebildet als im Zusammenhang mit der Ausführung nach Fig. 1 beschrieben. Die Zentriereinrichtung 118 in der Ausführung nach Fig. 2 wird nämlich als ein mittels einer Feder nach unten vorgespannter Zentrierstift ausgebildet, wobei dieser Zentrierstift auch eine Schaltfunktion hat und über einen Schalter (nicht gezeigt) der Pressensteuerung signalisiert, daß sich tatsächlich ein Bolzenelement unterhalb des Stempels befindet. Die Pressensteuerung kann so ausgelegt werden, daß in Ermangelung dieses Signals eine Schließbewegung der Presse nicht durchgeführt werden kann, wodurch Fehlfunktionen bzw. der Ausstoß von Blechteilen ohne Bolzenelemente verhindert werden können.

Eine andere Abwandlung, die möglich ist, jedoch in den Zeichnungen nicht gezeigt ist, besteht darin, die Haltefinger 90 im Anlagebereich an dem Gewinde des Bolzenelementes mit einer Profilierung zu versehen, welche zum Gewinde komplementär ist. Auf diese Weise wird sichergestellt, daß das Gewinde des Bolzenelementes durch die Haltefinger nicht beschädigt wird.

Obwohl sich die beiden oben erläuterten Ausführungsbeispiele mit der Führung von Bolzenelementen befassen, bei denen eine Nietverbindung mit dem Blechteil im Bereich des Überganges zwischen dem Schaftteil und dem Kopfteil des Bolzenelementes erzeugt wird, können diese Ausführungsformen durch entsprechende Abwandlung der Gestalt der Haltefinger auch für solche Bolzenelemente verwendet werden, die mit dem Kopf nach unten geführt werden müssen und im Bereich des dem Schaftteil abgewandten Stirnende des Kopfes mit dem Blechteil vernietet werden. Genauso kann die Gestaltung der Haltefinger 90 an Mutterelemente angepaßt werden, mit einem Kopfteil größeren Durchmessers und einem Schaftteil längeren Durchmessers, wobei auch hier bei entsprechender Auslegung der Haltefinger die Befestigungselemente mit dem Kopf nach unten oder mit dem Kopf nach oben geführt werden können.

## Patentansprüche

1. Setzkopf (10) zum Einsetzen von aus Kopf- (22) und Schaftteil (24) bestehenden Elementen in ein vorgelochtes Werkstück (18), dadurch gekennzeichnet, daß das jeweils einzusetzende Element (20) im Setzkopf (10) von mindestens zwei oder drei Haltefingern haltbar ist, wobei jeder Haltefinger (90) das Element (20) zunächst sowohl am Kopfteil (22) als auch im Abstand davon am Schaftteil (24) in Setzrichtung zentriert, ausrichtet und positioniert.

2. Setzkopf nach Anspruch 1, dadurch gekennzeichnet, daß die Haltefinger (90) synchron schwenkbar angeordnet sind und vorzugsweise, daß eine Einrichtung (88) vorgesehen ist, welche während der Arbeitsbewegung des Setzkopfes die synchronisierte Schließ- und Öffnungsbewegungen der Haltefinger (90) bewirkt, wobei die Synchronisiereinrichtung vorzugsweise aus einer Hülse (88) mit Formschrägen (104, 110) zur Steuerung der Schwenkbewegung der Haltefinger (90) bei der Arbeitsbewegung des Setzkopfes (10) besteht.

3. Setzkopf nach Anspruch 2, dadurch gekennzeichnet, daß nachgiebige Druckmittel zum Vorspannen der Hülse (88) in Richtung des Werkstückes (18) während der Arbeitsbewegungen des Setzkopfes (10) vorgesehen sind.

4. Setzkopf nach einem der vorhergehenden Ansprüche, dadurch gekennzeichnet, daß mindestens einige der Haltefinger (90) eine jeweilige Schulter (96) aufweisen, wobei die Schulter (96) der Haltefinger (90) mit der Unterseite und vorzugsweise auch mit der Seitenfläche des Kopfteiles (22) des Elements (20) zur Positionierung desselben zusammenwirken, wobei die Schulter (96) bezogen auf die Lage der jeweiligen Schwenkachse (92) und die Form der Unterseite des Kopfteiles (22) vorzugsweise eine einem Evolventen ähnliche Form aufweisen und/oder, daß die Haltefinger (90) dem jeweiligen Element (20) zugewandte schräge Führungsflächen (100) aufweisen, welche die zentrische Führung des Kopfteils (20) des Elementes (20) während der Arbeitsbewegung des Setzkopfes (10) gewährleisten.

5. Setzkopf nach einem der vorhergehenden Ansprüche, dadurch gekennzeichnet, daß ein Setzstempel (30) vorgesehen ist, der an seiner dem Element zugewandten Stirnfläche eine Zentriereinrichtung (118) aufweist, welche mit einer komplementären Zentrierhilfe (120) am Stirnende des Elementes (20) zusammenwirkt, wobei vorzugsweise nachgiebige Druckmittel vorhanden sind, um den Stempel während der Arbeitsbewegung des Setzkopfes (10) in Richtung vom Werkstück (18) weg vorzuspannen, und wobei die nachgiebigen Druckmittel zum Vorspannen des Stempels und/oder der Hülse vorzugsweise Federn sind.

6. Setzkopf nach Anspruch 8, dadurch gekennzeichnet, daß er ein Gehäuse (38, 39) aufweist, das eine für den Setzstempel (30) abgestufte Bohrung (40) enthält, deren unterer engerer Abschnitt eine Führung für den Setzstempel (30) und deren oberer erweiterter Abschnitt einen Zylinderraum (52) für einen am Setzstempel vorgesehenen Kolben bildet, daß eine Mehrzahl von Zylinderbohrungen (76) im Gehäuse vorgesehen und um die abgestufte Bohrung herum angeordnet sind, deren Achsen parallel zur Längsachse (28) der abgestuften Bohrung (40) stehen, und daß in den Zylinderbohrungen (76) angeordnete Kolben (78) über jeweilige Kolbenstangen (82) mit der unterhalb des Gehäuses angeordneten Hülse (88) verbunden sind und/oder, daß das Gehäuse ein zweiteiliges Gehäuse ist, wobei die abgestufte Bohrung (40) im unteren Gehäuseteil (38) und die Zylinderbohrung (76) im oberen Gehäuseteil (39) angeordnet sind, wobei sich die Kolbenstangen (82) der in den Zylinderbohrungen (76) verschiebbar angeordneten Kolben (78) vorzugsweise durch Führungsbohrungen (84) des Gehäuseunterteils (38) hindurcherstrecken.

7. Setzkopf nach Anspruch 6, dadurch gekennzeichnet, daß das obere Gehäuseteil (39) zylinderhutartig ausgebildet ist, wobei das Zylinderteil des oberen Gehäuseteils (39) über einen zylindrischen, den Zylinderraum (52) enthaltenden Abschnitt des unteren Gehäuseteils (38) gestülpt wird und dabei die obere Wegbegrenzung des Kolbens (46) des Setzstempels (30) bildet, welcher an seinem oberen Ende oberhalb des Kolbens durch eine Bohrung des Gehäuseoberteils zur Anbringung der erforderlichen Setzkraft und zur Einleitung der Setzbewegung des Setzstempels hinausragt und/oder, daß nur ein nachgiebiges Druckmittel in Form eines gasförmigen oder flüssigen Druckmediums, vorzugsweise Preßluft vorgesehen ist, wobei dann eine Überströmmöglichkeit (Querkanal 60) zwischen den Zylinderbohrungen (76) der die Hülse vorspannenden Kolben (46) und dem Zylinderraum des den Stempel vorspannenden Kolbens (46) vorgesehen ist.

8. Setzkopf nach einem der vorhergehenden Ansprüche, dadurch gekennzeichnet, daß er zum Einsetzen in ein Werkzeug (12) ausgebildet ist, welches selbst in eine Presse (15, 16) einsetzbar oder mit einem Kraftpaket koppelbar und von dieser bzw. von diesem antreibbar ist.

9. Setzkopf nach einem der vorhergehenden Ansprüche, dadurch gekennzeichnet, daß er einen schräg zur Setzrichtung verlaufenden Zuführkanal (114) aufweist, über den die Elemente (20) zwischen den Haltefingern (90) und unterhalb des Stempels (30) vereinzelt einspeisbar sind und daß bei Vorhandensein eines Elementes (20) zwischen den Haltefingern (90) der Zuführkanal durch die nachfolgende Arbeitsbewegung des Setzkopfes zumindest teilweise schließbar ist, vorzugsweise durch den Stempel (30) oder die Hülse (88), wodurch die Einführung eines weiteren Elementes (20') bis zur erneuten Freigabe des Zuführkanals (114) verhindert ist und/oder, daß die vereinzelte Zuführung der Elemente (20) über die Steuerung der den Setzkopf (10) enthaltenden Arbeitsmaschine gesteuert wird und/oder, daß Federelemente den Haltefingern (90) zugeordnet sind um Herstellungstoleranzen der Befestigungselementen auszugleichen, bspw. sind Ringfederelemente in Nuten der konusförmigen Ringfläche (104) der Hülse vorgesehen.

10. Setz- und/oder Stanzkopf für Befestigungselemente mit Stanz- und/oder Nietverhalten mit einem die Befestigungselemente nach unten drückenden Stempel (30), mit einem dem Stempel (30) zugeordneten und diesen mittels pneumatischer Druckmittel nach oben vorspannenden Kolben (46), und mit einem mit dem gleichen pneumatischen Druckmittel nach unten vorgespannten Bauteil (88), daß ein Niederhalterfunktion und/oder das jeweilige Befestigungselement positionierende Funktion ausübt, dadurch gekennzeichnet, daß zum Vorspannen des Bauteils mindestens drei Zylinderbohrungen (76) im Setz- bzw. Stanzkopf radial außerhalb der den Stempel nach oben vorspannenden Zylinder-Kolbeneinheit vorgesehen sind und in diesen Zylinderbohrungen angeordneten Kolben (78) über jeweilige Stößel (82) auf das Bauteil einwirken, wobei die Befestigungselemente vorzugsweise direkt unterhalb des Stempels (30) in eine innerhalb des Bauteils (88) vorgesehene Kammer einführbar sind.

11. Setzkopf nach Anspruch 10, dadurch gekennzeichnet, daß durch entsprechende Dimensionierung des Stempels (30) und der diesen aufnehmenden Bohrung (40) und/oder durch in der Wand der Bohrung (40) und/oder im Stempel vorgesehenen Riefen ein sich entlang des Stempels (30) bewegender, vom pneumatischen Luftstrom, ggf. aus der Kammer (52) gespeister Luftstrom erzeugbar ist, wobei vorzugsweise der Luftstrom im Bereich der innerhalb des Bauteils (88) vorgesehenen Kammer eine Reinigungsfunktion ausübt.

12. Verfahren zum Einsetzen von Elementen in ein ein Loch aufweisendes Werkstück, vorzugsweise unter Anwendung eines Setzkopfes (10) nach einem der Ansprüche 1 bis 20, wobei die Elemente vereinzelt im Arbeitstakt schräg unterhalb eines Setzstempels (30) in einen Setzkopf (10) eingeführt werden, dadurch gekennzeichnet, daß die Elemente (20) zwischen mindestens drei Haltefingern (90) eingeführt werden, welche jeweils das Element (20) zunächst sowohl am Kopfteil (22) als auch im Abstand davon am Schaftteil (24) in Setzrichtung (28) zentriert ausgerichtet und positioniert halten, daß bei der anschliessenden Schließbewegung des Setzkopfes (10) die Haltefinger (90) das jeweilige Element noch während der anfänglichen Einführung des Schaftteils (24) in das Loch des Werkstückes (18), welches über eine Matrize (32) ausgerichtet positioniert ist, halten, und erst nach Übernahme der Führung des Schaftteils (24) durch die Führungsbohrung (123) der Matrize (32) nach außen wegschwenken, jedoch auch während dieser Schwenkbewegung das Kopfteil während mindestens einem Teil der Setzbewegung des Tempels (30) zentriert führen, bis das Kopfteil des Elementes am Werkstück (18) anliegt oder sich diesem (42) nähert, und daß mittels des Setzstempels (30) und der Matrize (32) das Element mit dem Werkstück (18) formschlüssig verbunden wird.

13. Verfahren nach Anspruch 12, dadurch gekennzeichnet, daß der Setzstempel (30) mit dem Kopfteil (22) des Elementes (20) während der Einführbewegung des Elementes (20) durch das Loch (26) des Werkstückes hindurch zusammenarbeitet und zentriert wird, wobei vorzugsweise die Schließ- und Öffnungsbewegungen des Setzkopfes das Schließen (10) bzw. das Öffnen des Zuführkanals (114) für die vereinzelten Elemente bewirkt und/oder, daß während der Arbeitsbewegung des Setzkopfes (10) eine die Schwenkbewegung der Haltefinger (90) steuernde Hülse (88) ständig in Richtung auf das Werkstück (18) zu und der Setzstempel (30 ständig in der entgegengesetzten Richtung, d.h. vom Werkstück (18) weg vorgespannt wird, wobei das ständige Vorspannen der Hülse (88) bzw. des Setzstempels (30) vorzugsweise durch ein einziges Druckmittel bzw. -medium bewirkt wird.

14. Verfahren nach einem der Ansprüche 12 bis 13, dadurch gekennzeichnet, daß der Setzkopf (10) zum Einsetzen in ein Werkzeug (12) ausgebildet ist, welches selbst in eine Presse (15, 16) einsetzbar ist oder mit einem Kraftpaket gekoppelt oder koppelbar ist und von dieser bzw. diesem angetrieben wird.
